(19)

Europäisches
Patentamt
European
Patent Office
Office européen
des brevets

(11) **EP 1 950 922 A1**

(12) **EUROPEAN PATENT APPLICATION**

(43) Date of publication:
**30.07.2008 Bulletin 2008/31**

(51) Int Cl.:
**H04L 12/64** $^{(2006.01)}$

(21) Application number: **07425034.1**

(22) Date of filing: **24.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicants:
• **Siemens Networks GmbH & Co. KG**
  **81541 München (DE)**
• **Siemens Networks S.p.A.**
  **20126 Milano (IT)**

(72) Inventors:
• **Balazs, Andras, Dr.**
  **85521 Ottobrunn (DE)**
• **Binde, Stephan, Dr.**
  **82065 Baierbrunn (DE)**
• **Prati, Luca**
  **44100 Ferrara (IT)**
• **Seitter, Norbert**
  **82008 Unterhaching (DE)**

(74) Representative: **Giustini, Delio**
  **Siemens AG**
  **Postfach 22 16 34**
  **80506 München (DE)**

(54) **Method and device for adjusting a jitter buffer and communication system comprising such device**

(57)    A method and device are provided for adjusting a jitter buffer, comprising the steps of detection of a jitter error and adjusting the jitter buffer based on said jitter error detected. In addition, a communication system comprising such device is presented.

FIG 4

Sent packets

| 401 | 402 | 403 | 404 |
|-----|-----|-----|-----|
| 1 | 2 | 3 | 4 |

Received packets

405 — 1    406 — 2    3 — 407    4 — 408

410    411    414    412    413    time 409

415 — 1    receive buffer    Packet 1 fits in Jitter Buffer ~ 423
419    425

416 — 2 lost part    receive buffer    Packet 2 does not fit in Jitter buffer JB_lost event, increase jitter buffer ~ 424
420    421

417 — 2 3    receive buffer    Packet 3 fits in Jitter Buffer ~ 426
422

418 — 4    receive buffer    Packet 4 fits in Jitter Buffer ~ 427

EP 1 950 922 A1

**Description**

Field of the Invention

The invention relates to a method and device for adjusting a jitter buffer and communication system comprising such device.

Modern communication systems, e.g., 3G mobile networks, are packet-oriented. Messages are separated in discrete packets of a specific length (in bytes of data or milliseconds of media content) and transmitted via mobile or fixed networks.

An IMS (IP multi-media subsystem) reference architecture according to 3GPP (3rd Generation Partnership Project) Releases 5 and 6 is the standard for convergence of mobile networks (mobile 2G/3G packet-switched (PS) domain, mobile 2G/3G circuit-switched (CS) domain, wireless LAN networks) and fixed networks (Public Switched Telephone Networks (PSTN), via DSLAM (digital subscriber line access multiplexer) connected WLAN and DSL networks). Reference is hereby made to telecommunications standard 3GPP TS 23.002.

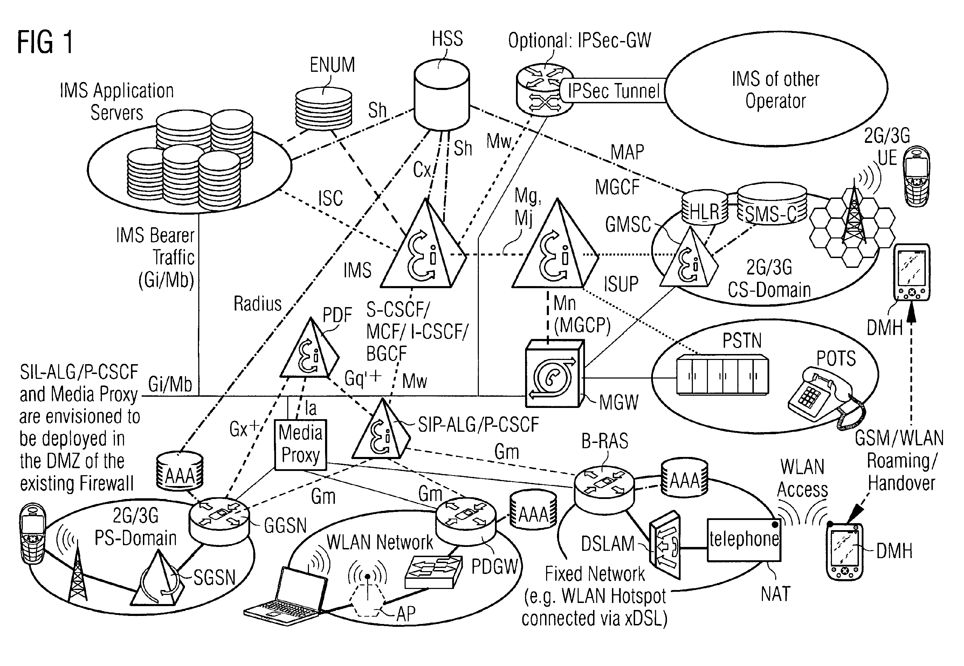

**Fig.1** shows a possible implementation of such an architecture. At the network borders of the different networks there are Media Gateways for converting the different transport formats between the connected networks (e.g. TDM format to ATM format or to IP format).

Due to the de-central structure of the reference architecture that allows to connect a number of different network components (routers, switches, access equipment, etc.) variable absolute delays (channel-dependent) and time-dependent delays (jitter) occur. Data packets cannot be received simultaneously with sending time (delay) and packets of the same data stream show different delays depending on the packet number (jitter). Overall values of delay and jitter are a measure of a quality for the whole network.

Various delay aspects of communication networks have been examined for a long time and are the basis for Quality of Service (QoS) related standards. For example, ITU-T G.114 defines delay values and assigns them to different quality classes. In addition, G.109, G.107 and ETSI TS101.329-7 show the perceivable speech quality in relation to its delay and defines so-called mean opinion score (MOS) quality criteria. The investigation regarding influence of jitter on speech quality is directed to data-packets with significant payload length transported via Voice-over-IP networks.

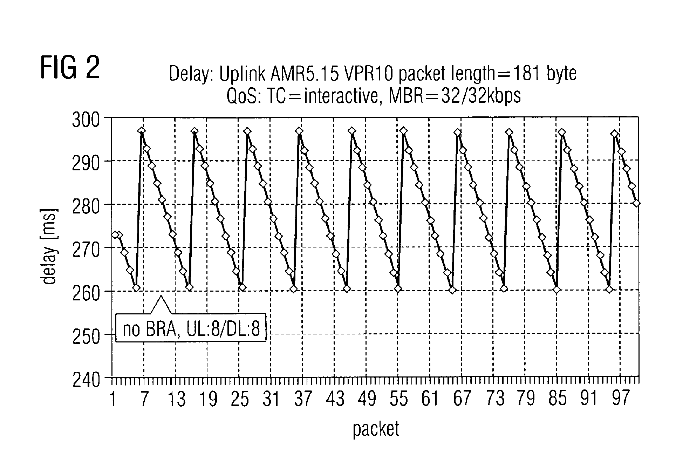

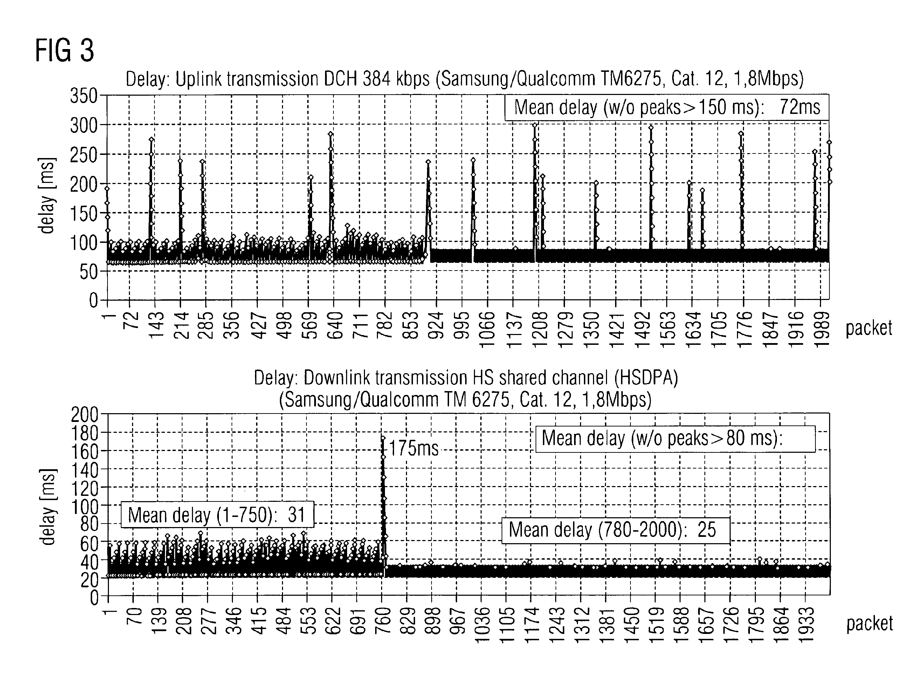

**Fig.2** and **Fig.3** show typical delay variation behaviors and jitter in packet-oriented mobile networks of the 3GPP packet switched (PS) domain.

Fig.2 shows exemplary an interactive 32kbps uplink channel in the PS-Domain with regards of delay in milliseconds over a number of packets. It illustrates a regular delivery of frames, wherein 10 frames are packed and transferred together. This leads to a deterministic delay variation adding up to about 40 milliseconds.

Fig.3 illustrates irregular jitter effects coming from a statistical distribution of packet arrivals that can be characterized as a non deterministic behavior (so-called stochastic jitter). According to a common assumption, the data packets are sent at regular time intervals, but they arrive at a receiving side with variable time delay (jitter). These jitter effects depend on the transmission method of the packets and on the presence of a source rate control. Basically, there is no relationship between jitter and packet content (speech or pause) but in many cases the speech pause samples are transferred differently, e.g., one such packet every 160ms.

Transmission of voice over packet networks (e.g. Voice-over-IP) uses a coding mechanism (e.g., 3GPP AMR, ITU-T G.729, etc.) at the transmission side of the network and a corresponding decoding mechanism at the receiving side of the network. Speech is represented as data packets or frames which are transmitted over the network channel, wherein the channel itself has non-ideal characteristics. Besides a non-ideal impulse response of the communication channel, delay and delay variations (jitter) may result from the channel leading to degraded perceivability and comprehensibility after reconstruction of the speech samples at the receiving side. Especially jitter effects hinder the reconstruction of the original speech data, because such effects impair a continuous flow of packets in the correct order. In a worst case, packets that were sent later can arrive earlier at the receiver resulting in so-called "out-of-sequence" packets. Another possibility is that packets with high jitter arrive at the receiver after the receiver's time window (i.e. time limit) has already been closed and therefore, these packets are lost.

In order to ensure reproduction of the data packets or frames in the right order, an additional delay may be inserted by the receiver. However, this delay could result in an increased end-to-end delay leading to an impairment of the voice quality.

In principle, the problem of jitter could be solved by jitter buffer of sufficient size at the receiving side of the communication system together with a buffer management. Without buffer management a large buffer would not have the desired effect on jitter compensation. For example, a jitter buffer with infinite size will lead to buffer underflow if there is no adequate time to be passed prior to delivering the packets.

This receive path jitter buffer is used for storing received packets and forwards them within distinct synchronization intervals (that can correspond to (or be smaller as) the size of the jitter buffer) to the following units. However, using a jitter buffer for receiving packets results in additional delay, because the buffer management has to wait until a regular data stream can be forwarded to the subsequent unit. Such additional delay deteriorates speech quality. Furthermore, a jitter buffer of large size consumes memory which results in additional costs.

On the other side, a jitter buffer that is too small may not be able to store all packets arriving at the receiver within the time period to be buffered. Packets that arrive at the receiver with a large jitter will be lost, if the buffer is already filled. Moreover, if the jitter buffer size is too small, there will be not enough space in order to feed the output when packets arrive very late. In such case the jitter buffer could become empty.

Background art

EP 1 146 678 A1 describes a method to buffer a data stream at its reception. The drift is measured and compared with predefined values. Depending on the result of that comparison, the buffer size will be adapted dynamically such to optimize the transfer of the packets according to some predefined criteria.

However, this approach bears the disadvantage as only certain thresholds are applied dependent on the value of the jitter measured that it provides a merely rough approach of adaptation.

Object and summary of the Invention

It is an **object** to be solved to avoid the disadvantages as described supra and to provide an improved method for adjusting a jitter buffer as well as a device thereof. In addition a communication system comprising such a device is to be provided in accordance with a particular solution of the aforementioned problem.

This problem is solved according to the features of the independent claims. Further embodiments result from the depending claims.

To overcome the aforementioned problem a method is provided for adjusting a jitter buffer, comprising the steps of detection of a jitter error and adjusting the jitter buffer based on said jitter error detected.

It is an advantage that the jitter error is determined and based upon such error the jitter buffer may be adjusted on an arbitrarily fine level. This allows the method to be adaptive in view of the error itself that may be the reason for changing the size of the jitter buffer.

In addition, several jitter errors can be detected in order to adjust the jitter buffer. Hence, there may be one or more such "jitter error" events that may directly or indirectly influence the adjustment of the jitter buffer, in particular the size of this jitter buffer.

An embodiment is that a rate of jitter errors is determined, wherein based on this rate the (size of) the jitter buffer is adjusted.

Such determination of the jitter error rate bears the advantage that transient jitter errors could be suppressed, i.e. jitter errors that may occur due to a short-term distortion would have no impact on adjusting the jitter buffer. This is possible as the jitter error rate (e.g., jitter errors per distinct time interval) can be compared to a predefined rate and an adjustment of the jitter buffer is only initiated in case this predefined rate is reached and/or exceeded (by the jitter error rate).

Another embodiment is the aforementioned method further comprising the following steps:

- At least one jitter error message is created based on at least one jitter error;
- The jitter buffer is adjusted based on the at least one jitter error message.

This bears the advantage that a jitter error message can be used to be send to, e.g., a jitter manager, and - directly or indirectly - influence the adjustment of the jitter buffer.

It is another embodiment that the size of the jitter buffer is adjusted depending on the rate of received frames in a receiver. The frames could be also referred to as packets and/or data packets. In particular, the frames may contain information, in particular speech information, wherein said speech information can also comprise speech elements according to the adaptive multi rate (AMR) standard.

In yet another embodiment, the receiver can be arranged within an IP multi-media system, in particular an IP multi-media subsystem (IMS). The receiver can also be or arranged within a multi-media gateway (MGW).

In a further embodiment, the jitter buffer can be part of a receive buffer.

In an advanced embodiment, jitter errors occur when, due to a delay of a frame to be received, the frame itself does not fit into the jitter buffer.

Another embodiment is the aforementioned method further comprising the following steps:

- The frame is received by a jitter control manager;
- The jitter control manager detects the jitter error;
- In case a jitter error occurs, an error message is forwarded to a jitter manager;
- The jitter manager determines the rate of error messages and, in case the rate of error messages is higher than a predetermined threshold, activates a jitter buffer control (JBC);

- The jitter buffer control (JBC) adjusts the size of the jitter buffer.

This allows the size of the jitter buffer to be adjusted based on a rate of error messages processed by a jitter manager. Advantageously, the processing of messages could be split to different threads, processes or processors to be executed separately from each other.

Furthermore, an embodiment provides a jitter buffer decrease manager to reduce the size of the jitter buffer when no jitter error occurs for a predetermined period of time. The jitter buffer decrease manager could also reduce the size of the jitter buffer when no jitter error message is detected for a predetermined period of time. In particular, a timer could be used to measure the predetermined period of time.

Hence, the size of the jitter buffer could not only be increased, but also be decreased. The threshold values allow the jitter buffer size to be adjusted only in case ongoing changes occur in the communication channel. Thus, it is avoided to abruptly change the jitter buffer size due to short term changes of the communication channel and hence impair the quality of the communication channel for the end users.

The aforementioned object is also solved by a device for adjusting a jitter buffer comprising a processor or computer that is equipped such that a method as described before can be run on said processor or computer.

In a further embodiment the device is a communication device, in particular a multi-media gateway. In particular, the device may be connected to at least one packet-switched network and/or at least one circuit-switched network.

It is further provided a communication system comprising the device as described before.

This invention is in particular related to communication networks focused on applications in 2G and/or 3G mobile networks, especially in Media Gateways. The principles disclosed herein can be further applied to any kind of arbitrary communication networks that are packet-oriented as well as to any data system that has to deal (and hence tries to compensate) jitter effects based on any data transmission.

It is to be noted that a sender usually provides as an output a well and a regular spaced data stream. The receiver, in particular the jitter buffer manager, may be in charge to recover this regular spacing between the data packets. All kind of impairment could be modelled as various delay variations relevant for the specific transport channel. No jitter effects caused by the sending process itself (e.g. CSMA-CD procedure) are examined here. However, the solution provided herein is also able to compensate jitter caused by the terminal and/or jitter caused by the access network (data channel) itself.

List of Drawings

Embodiments of the invention are shown and illustrated in the following figures:

Fig.4    shows a diagram for explaining the principle of a jitter-afflicted transmission of message packets;

Fig.5    shows a flowchart of a Jitter Control Manager and a Jitter Manager;

Fig.6    shows a flowchart of a Jitter Buffer Control;

Fig.7    shows a flowchart of a Jitter Buffer Decrease Manager and a timer unit associated therewith;

Detailed description of a preferred embodiment of the Invention

As there is a common tendency that networks converge to one overall network (see Fig.1), various requirements resulting from single network characteristics apply to such an aggregated network in a similar manner. One issue is an efficient usage of bandwidth in particular with regard to the radio transmission link (i.e. air interface) of the packet switched (PS) domain. Due to the bandwidth requirements, packet header compression procedures are applied or, in case regulatory issues require a different approach, single packets are combined to larger packets in order to reduce the overhead data located at the headers of the packets. For example, two or three adaptive multi rate (AMR) encoded voice frames are combined to one single (and hence longer) data packet, which requires a larger buffer at the receiving side in order to compensate delay and jitter effects.

Different kinds of jitter effects stem from various kinds of coupling different network types. Due to the respective network structure these jitter effects show deterministic characteristics (e.g. synchronization effects) and stochastic behavior (e.g. network access procedures, priorities). As the data packets follow different routes through the network they need different amounts of time as a result to the traffic and the routing throughout the network at the particular time when the data packet is launched. This delay is intrinsic to the technology used, e.g. Ethernet with access protocol "Carrier Sense Multiple Access with Collision Detection".

One embodiment described herein relates to a rate-controlled adaptive jitter buffering procedure, which aims to adapt the size of a jitter buffer to the rate of received packets. The jitter delay is compensated by the policy of the jitter buffer manager based on the fill level of the jitter buffer.

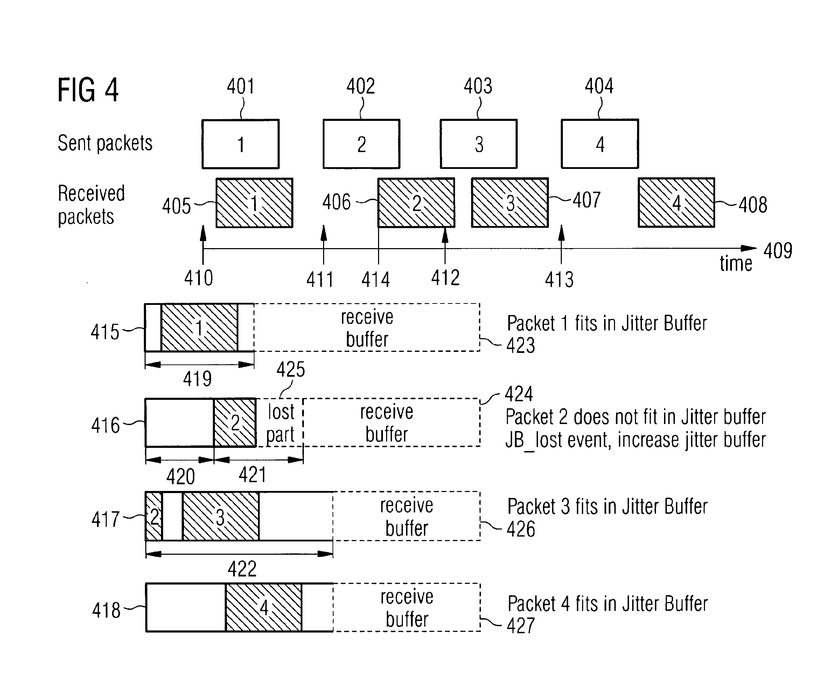

The principle of a jitter-afflicted transmission of message packets is illustrated in Fig.4.

A stream of data packets 401, 402, 403 and 404 (No.1 to No.4) is continuously sent by a transmitter. Each packet has a certain length and a fixed temporal distance to the preceding packet. These packets 401 to 404 are sent over a real (i.e. non-ideal) communication channel. At the receiver, data packets 405, 406, 407 and 408 (also No.1 to No.4) arrive delayed and may comprise a jitter (i.e. an individual delay per data packet). Fig.4 shows a timeline 409 to visualize the differences (in time) between the data packets sent (401 to 404) and those received (405 to 408).

Fig.4 further shows different phases 415 to 418 of how a jitter buffer and a receive buffer are used and may be adjusted in response to the data packets 405 to 408 received.

The receiver has synchronization points 411, 412 and 413, which could be computed during an initial synchronization phase. At these synchronization points 411 to 413 the received packets are stored in a receive buffer (see 423, 424, 426, 427). After one or more synchronization point(s) the buffer is overwritten with the next data packet.

While the receive buffer 423, 424, 426, 427 is large enough to capture several data packets received, the first part of this receive buffer is used as jitter buffer 419, 422. A "FILL LEVEL" of the jitter buffer represents a waiting period until a next packet is transferred for further processing. If the jitter buffer is too small, the packet in its full length cannot be transferred for further processing and hence the packet has to be discarded. This applies, e.g., to packet No.2 in phase 416: The jitter buffer 419 is too small to fully store data packet No.2, which leads to a stored part and a lost part 425 of said data packet No.2.

On the other hand, if the jitter buffer is oversized, the additional delay resulting from jitter compensation gets too large and the continuous stream of speech may be interrupted.

In some cases, it may be necessary to provide a long waiting time. This can be the case when data packets arrive anticipated at the receiver.

In order to minimize the delay a packet will spend in the jitter buffer, an "AVERAGE FILL LEVEL" of the jitter buffer is considered. This parameter describes an average time of a data packet spent inside the jitter buffer. It is advantageous to adjust the jitter buffer (size) smoothly, because abrupt variations in time could significantly impair the voice stream.

The method described herein adapts the buffering delay to fluctuating network jitter characteristics by increasing and/or decreasing the reserved buffer part. This adaptation can be performed by an iterative procedure, e.g. a so-called "Leaky Bucket"-algorithm or variations thereof.

After an adjustment that increases the jitter buffer (see phase 417), this enlarged jitter buffer enables transmitting future packets that have the same jitter as data packet No.2. Data packets No.3 and No.4 can thus be stored in this enlarged jitter buffer (see phases 417 and 418) and then transmitted to the following execution units without loss of data.

Hence, the phases 415 to 418 shown in Fig.4 can be summarized as follows: In phase 415, the jitter of received data packet No.1 (405) is small and data packet No.1 can be stored in the jitter buffer 419. In phase 416, this size of the jitter buffer 419 is not sufficient to fully store data packet No.2 (406) which comprises a jitter 420 (corresponding to a time period between points in time 411 and 414). That leads to a lost part 425 of data packet No.2. As this data packet No.2 does not fit in the jitter buffer, a jitter error is detected which could lead to a jitter error message (JB_lost event) produced to increase the size of the jitter buffer. In phase 417 the jitter buffer 422 is increased in size, packet No.3 (407) fits (together with the jitter of this data packet No.3) into the jitter buffer. The same applies in phase 418 to data packet No.4 (408).

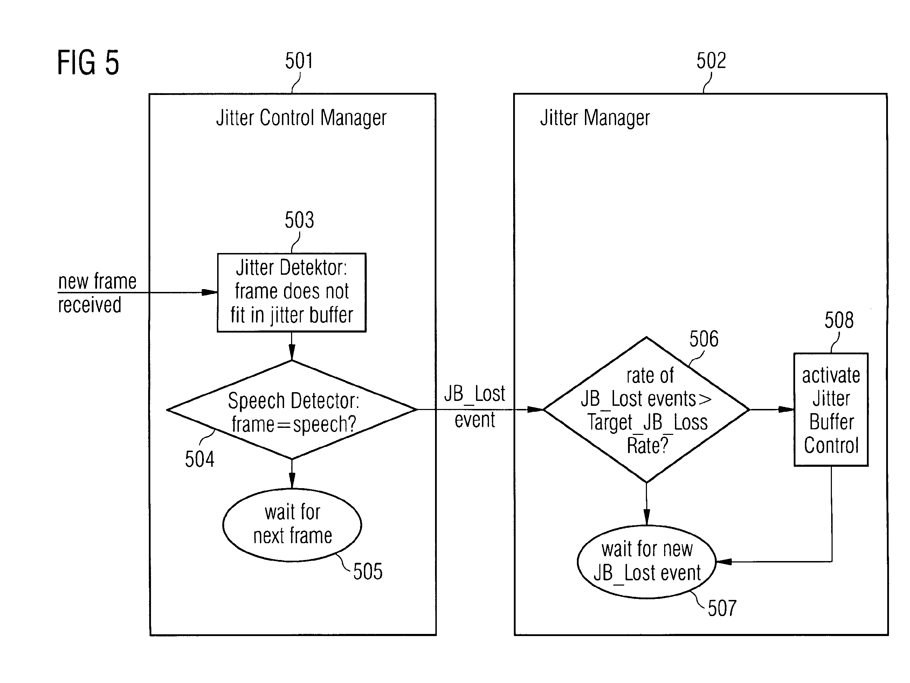

The procedure for controlling the jitter buffer size is further explained with respect to Fig.5, Fig.6 and Fig.7.

A Jitter Control Manager 501 according to Fig.5 detects jitter errors. A data packet or frame that does not fit into the jitter buffer generates a jitter error. However, this data packet to be discarded for delay optimization by the Jitter Buffer Manager 501 may not be lost, because it can still be stored within the receive buffer.

Hence, according to Fig.5, a new frame received by the Jitter Control Manager 501 is processed by a jitter detector 503 analyzing that the frame does not fit into the jitter buffer. Speech detector 504 checks the data packet by analyzing the frame of the data whether the frame is "speech", "pause" or "silence". Commonly used codecs (ITU-T G. 729, 3GPP AMR or others) have a particular information field containing information of the contents of the frame. If the speech detector 504 detects a speech frame having caused the jitter error, it activates the "JB_Lost event" that is sent to a Jitter Manager 502. If the frame does not correspond to "speech", the speech detector 504 jumps to block 505 thereby waiting for the next frame.

Missing packets (due to losses of the communication channel) or "out-of-sequence"-packets are recognized by the sequence number of the packets (see, e.g., RFC 3550, RTP: A Transport Protocol for Real-Time Applications). If the jitter buffer is large enough, large meaning in particular multiple packets fitting into the jitter buffer, out-of-sequence packets can be re-sorted using the sequence number of the single packets. Packets that arrive after the time when they are planned to be delivered by the Jitter Buffer Manager (so-called "Late_Loss") may be discarded, resulting in packet errors.

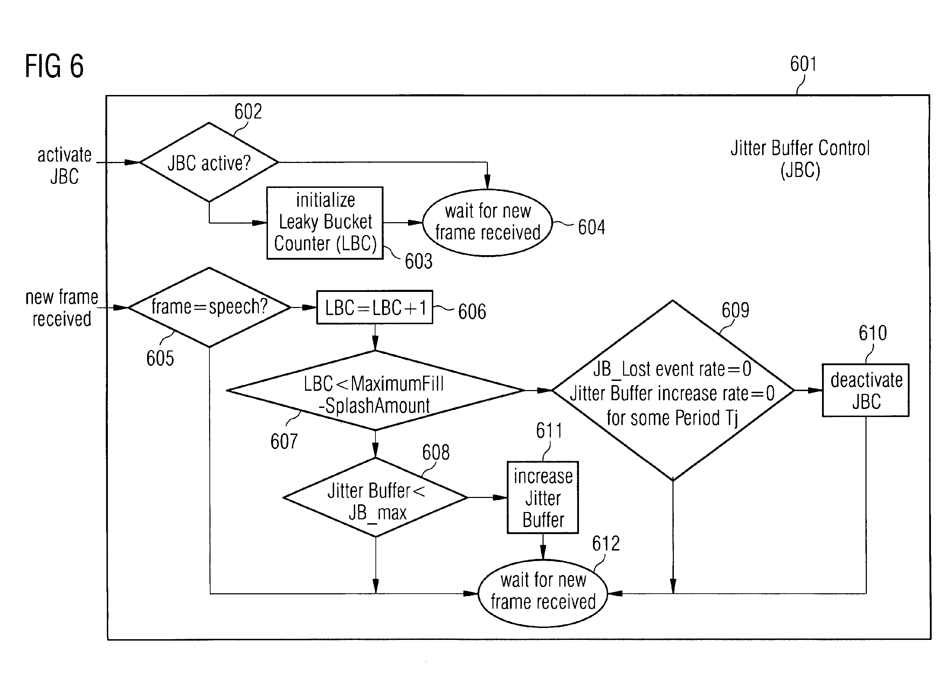

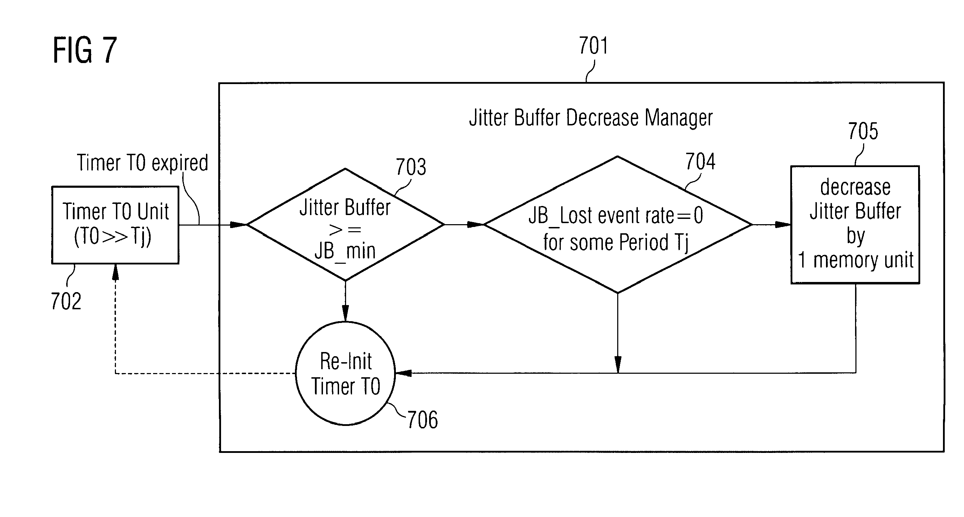

Also variable packet rate or discontinuous transmission can be accepted and compensated by the jitter buffer. It is also possible to specify time limits for a maximum and for a minimum Jitter delay ("JB_max" and "JB_min" according to Fig.6 and Fig.7). Packets that arrive after a maximum tolerable jitter delay JB_max may have to be discarded.

The "JB_Lost events" are sent to the Jitter Manager 502. The Jitter Manager 502 decides in a block 506 whether the rate at which the JB_Lost events arrive at the Jitter Manager 502 is (equal and/or) higher than a predetermined threshold Target_JB_Loss. If this is the case, a Jitter Buffer Control 601 (JBC, see also Fig.6) is activated in block 508. Subsequently, the Jitter Manager 502 waits for the next (new) JB_Lost event (see block 507). If the rate of JB_Lost events is - to be decided within block 506 - smaller (or equal) than the predetermined threshold Target_JB_Loss, the Jitter Manager 502 also waits for the next (new) JB_Lost event (see block 507).

The rate of JB_Lost events bears the advantage of a well controlled and smooth increase of the jitter buffer (instead of an abrupt increase based on single data samples) thereby avoiding the buffer from growing in an unpredictable and objectionable manner.

The Target_JB_Loss rate is a configuration parameter of the method and can be specified, e.g., by a management system, in order to adjust the Jitter Buffer Control (JBC) to various conditions depending on the respective circumstances.

As an example, it could be avoided to activate the Jitter Buffer Control after each lost frame, since short time jitter peaks can arise in the network (see Fig.3). These short-time peaks may in a preferred mode not have any (or any significant) influence on the adjustment of the jitter buffer size.

The Jitter Buffer Control 601 according to **Fig.6** is, e.g., activated by block 508 in Fig.5.

An "activate JBC" signal is fed to the Jitter Buffer Control 601. In a block 602 it is checked whether the Jitter Buffer Control 601 is yet active. If this is the case, it is branched to block 604 and hence waits for new frames to be received. If the Jitter Buffer Control 601 is not active, a Leaky Bucket Counter (LBC) is initialized in a block 603 and it is further branched to block 604.

After each arrival of a new packet or frame, a speech detector 605 checks if the actual frame is a speech frame. If the frame is a speech frame, the Leaky Bucket Counter is incremented by one in a block 606. Subsequently in a block 607 it is checked whether the Leaky Bucket Counter has already reached an upper border value

$$\texttt{MaximumFill - SplashAmount}$$

characterizing a predetermined maximum level for the Leaky Bucket Counter minus a fluctuation reserve.

If this upper border value is reached, next a block 608 is executed, wherein it is checked whether the jitter buffer is still below the predetermined maximum value JB_max. If this is the case, the jitter buffer is increased within step 611.

It is to be noted that such increase of the jitter buffer can be done by one or more units of predefined size.

If the upper border value 'MaximumFill - SplashAmount' is not yet reached, the length of the jitter buffer may remain unchanged. It is branched to a block 609, wherein the rate of the JB_Lost events and the rate of the Jitter Buffer increase rate are calculated for each packet during a predetermined period of time Tj (a so-called sliding window). If both rates, i.e. the JB_Lost event rate and the Jitter Buffer increase rate, within this time interval Tj equal zero, the Jitter Buffer Control 601 will be deactivated in a step 610.

The Jitter Buffer Control 601 will be reactivated (and re-initialized according to blocks 602 and 603) if the JB_Lost event rate is higher than the Target_JB_Loss rate according to block 506 in Fig.5.

Subsequent to block 605 (if the frame is not a speech relevant frame), block 608 (if the jitter buffer is not smaller than the predetermined value JB_max), block 609 (if both rates are not equal 0 for the time period Tj) and block 610 a block 612 is executed, wherein the next frame to be received is awaited.

It is to be noted that the initial value of the Leaky Bucket Counter (LBC), the MaximumFill parameter, the SplashAmount parameter and parameter for the time period Tj can be adjusted according to particular requirements that may differ according to the actual network-environment and/or interfaces the method is applied to.

A parameter set could be calculated via off-line simulations of the communications network according to different scenarios. This may result in a parameter set with robust convergence to small jitter delays and a low packet lost rate. This calculated parameter set could further be adjusted by means of a management system to fulfill the needs of different network operators.

Besides simulation as one possible means to find a convenient parameter setting, it is also possible to derive a set of parameters from the once running network. This approach implies starting with some initial values and running the method in its network environment for a predetermined period of time. The parameters may reach an equilibrium state after this time period and this set of parameters may be useful to be applied as a set of starting parameters in a similar network environment. Hence, this learning process in a real environment may lead to useful results that could exceed the quality of simulation results.

In addition to these steps of continuously increasing the size of the jitter buffer, it is also useful to ensure that the size of the jitter buffer could be reduced. This is achieved by a Jitter Buffer Decrease Manager 701 according to **Fig.7.**

A timer unit 702 waits for a predetermined time T0, whereby this time T0 is significantly larger than the predetermined time period Tj (as introduced above), i.e. T0>>Tj. When the timer 702 expires, a signal "Timer T0 expired" is sent to a block 703. Block 703 checks whether the jitter buffer is larger or equals a predetermined minimum size JB min for the jitter buffer. If this is true, next a block 704 is executed thereby checking whether the JB_Lost event rate equals 0 for the predetermined period of time Tj. If this is also true, a block 705 is executed and the jitter buffer is decreased by one memory unit. Such reduction of the jitter buffer can, however, also comprise one or more units of predefined size.

Hence, the jitter buffer size can be reduced after some time periods T0 triggered by timer unit 702 in combination with the fact that no minimum size of the jitter buffer is reached and in further combination with the fact that no JB_Lost events occurred during the time period Tj.

If the condition checked in blocks 703 or 704 are not true, the timer T0 is re-initialized in a block 706 and it is branched to block 702. After block 705 is executed, next to be processed is block 706.

The condition T0>>Tj set forth supra ensures that the jitter buffer may increase faster than it may be reduced in size.

The parameter T0 of the timer unit 702 can be adjusted offline and/or be configurable via an outside network management system. An increase as well as a decrease of the size of the jitter buffer could reach an equilibrium state as long as the connected network does not change its characteristics. Changes of the network environment become apparent in a changed JB_Lost event rate, which results in a re-adjustment of the jitter buffer in an upward or a downward direction.

The configuration parameters can be optimized to reach minimum delay and/or minimum frame loss. However, a small delay results in a large frame loss and a small frame loss leads to a large delay. Therefore, adjustment of the configuration parameters needs some balance between delay and frame loss. Simulating the algorithm under real traffic conditions may help finding a good parameter set to start with. Another criteria to be considered is the convergence of the algorithm and the corresponding tracking performance. Convergence means how fast the JB_Lost events are reduced to a minimum under the restriction of minimum (tolerable) processing delay; tracking performance means how fast the adaptation can follow changes of channel characteristics that cause a degradation of delay and frame loss. Suitable parameter sets could be derived by offline simulation of different channels optimizing the convergence and tracking of the algorithm with the parameter set (JB_Max, JB_Min, Target_JB_Loss rate, MaximumFill, SplashAmount, Tj, TO).

The Leaky Bucket procedure presented is only one example of a procedure to be useful to achieve the desired result. Different kinds of procedures in particular various Leaky Bucket algorithms could be applied, for example by decrementing the Leaky Bucket Counter or the like. These algorithms could be used, e.g., for controlling the Jitter Buffer Control unit as described.

During a starting phase, the procedure allows in particular two approaches for jitter buffer adjustment to be used:

a) The method and/or system may start with a small jitter buffer to save memory resources and leave the initial jitter delay as small as possible and adjust to a larger amount of jitter buffer/delay in the course of adaptation.
b) As an alternative, the method and/or system could start with a large(r) jitter buffer to avoid frame losses at the beginning and adjust the buffer to smaller values throughout the running procedure.

The preferred strategy can be configured by the network operator. As the goal is to optimize end-user quality of service (QoS), a defensive strategy could be preferred, i.e. starting with a jitter buffer or considerable large size and reducing it gradually to further improve the end-to-end (E2E) quality of the communication channel. Starting with a short buffer, which might cause high packet loss ratio due to overflow could be deemed disadvantageous.

Another issue to be considered relates to the speed of adaptation of the Jitter Buffer Control 601. Such speed of adaptation could be improved if a knowledge about the characteristics of the actually used access network(s) in the A & B legs of the end-to-end session is used. This could imply a procedure where the jitter buffer control 601 is able to change between preconfigured settings, i.e. "jitter buffer settings" for each access network type, which are supported in various scenarios. Hence, a jitter buffer control decision may tell the operator if the current setting still fits the actual traffic pattern. If this were not the case, it would switch to a different setting and hence improve the expected quality in terms of delay and packet discard ratio. The operator could then upload the jitter buffer characteristics calculated by the adaptive jitter buffer algorithm and use it as starting parameter set for a subsequent run or for a similar environment, e.g., communications network structure.

**Claims**

1. A method for adjusting a jitter buffer, comprising the following steps:

   - Detection of a jitter error;
   - Adjusting the jitter buffer based on the jitter error detected.

2. The method according to claim 1, wherein several jitter errors are detected in order to adjust the jitter buffer.

3. The method according to claim 2, wherein a rate of jitter errors is determined and the jitter buffer is adjusted dependent upon said rate.

4. The method according to any of the preceding claims, comprising the following steps:

   - At least one jitter error message is created based on at least one jitter error;
   - The jitter buffer is adjusted based on the at least one jitter error message.

5. The method according to any of the preceding claims, wherein a size of the jitter buffer is adjusted depending on a rate of received frames in a receiver.

6. The method according to claim 5, wherein the receiver is arranged within an IP multi-media system.

7. The method according to any of claims 5 or 6, wherein the receiver is a or arranged within a multi-media gateway (MGW).

8. The method according to any of the preceding claims, wherein the jitter buffer is part of a receive buffer.

9. The method according to any of the preceding claims, wherein the jitter error occurs when, due to a delay of a frame to be received, the frame itself does not fit into the jitter buffer.

10. The method according to claim 9, comprising the following steps:

    - The frame is received by a jitter control manager;
    - The jitter control manager detects the jitter error;
    - In case a jitter error occurs, an error message (JB_Lost event) is forwarded to a jitter manager;
    - The jitter manager determines the rate of error messages and, in case the rate of error messages is higher than a predetermined threshold, activates a jitter buffer control (JBC);
    - The jitter buffer control (JBC) adjusts the size of the jitter buffer.

11. The method according to any of the preceding claims, wherein a jitter buffer decrease manager is provided to reduce the size of the jitter buffer when no jitter error and/or no jitter error message has been detected for a predetermined period of time.

12. A device for adjusting a jitter buffer, comprising a processor unit that is equipped such that the method according to any of the preceding claims is executable on said processor.

13. The device according to claim 12, wherein said device is a communication device, in particular a multi-media gateway.

14. The device according to any of claims 12 or 13, wherein said device is connected to at least one packet-switched network and/or at least one circuit-switched network.

15. A communication system comprising the device according to any of claims 12 to 14.

FIG 1

## FIG 2

Delay: Uplink AMR5.15 VPR10 packet length=181 byte
QoS: TC=interactive, MBR=32/32kbps

no BRA, UL:8/DL:8

packet

## FIG 3

Delay: Uplink transmission DCH 384 kbps (Samsung/Qualcomm TM6275, Cat. 12, 1,8Mbps)

Mean delay (w/o peaks>150 ms):   72ms

Delay: Downlink transmission HS shared channel (HSDPA)
(Samsung/Qualcomm TM 6275, Cat. 12, 1,8Mbps)

175ms

Mean delay (w/o peaks>80 ms):

Mean delay (1-750):  31

Mean delay (780-2000):  25

EP 1 950 922 A1

FIG 4

Sent packets

401 402 403 404

1 2 3 4

Received packets

405 — 1    406 — 2    3 — 407    4 — 408

time — 409

410   411   414   412   413

415 — 1    receive buffer — 423    Packet 1 fits in Jitter Buffer

419

425

416 — 2 lost part    receive buffer — 424    Packet 2 does not fit in Jitter buffer JB_lost event, increase jitter buffer

420   421

417 — 2 3    receive buffer — 426    Packet 3 fits in Jitter Buffer

422

418 — 4    receive buffer — 427    Packet 4 fits in Jitter Buffer

EP 1 950 922 A1

## FIG 5

**501** Jitter Control Manager

**502** Jitter Manager

**503** Jitter Detektor: frame does not fit in jitter buffer

new frame received →

**504** Speech Detector: frame=speech?

**505** wait for next frame

JB_Lost event →

**506** rate of JB_Lost events > Target_JB_Loss Rate?

**508** activate Jitter Buffer Control

**507** wait for new JB_Lost event

EP 1 950 922 A1

13

FIG 6

601 — Jitter Buffer Control (JBC)

activate JBC

602 — JBC active?

603 — initialize Leaky Bucket Counter (LBC)

604 — wait for new frame received

new frame received

605 — frame=speech?

606 — LBC=LBC+1

607 — LBC<MaximumFill-SplashAmount

608 — Jitter Buffer<JB_max

609 — JB_Lost event rate=0 Jitter Buffer increase rate=0 for some Period Tj

610 — deactivate JBC

611 — increase Jitter Buffer

612 — wait for new frame received

# FIG 7

701

Jitter Buffer Decrease Manager

Timer T0 expired

Timer T0 Unit
(T0 >> Tj)

702

703

Jitter Buffer
> =
JB_min

704

JB_Lost event rate = 0
for some Period Tj

705

decrease
Jitter Buffer
by
1 memory unit

Re-Init
Timer T0

706

EP 1 950 922 A1

**European Patent Office**

**EUROPEAN SEARCH REPORT**

Application Number

EP 07 42 5034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 862 298 B1 (SMITH SHAWN W [US] ET AL) 1 March 2005 (2005-03-01) | 1-3,6,7, 9,11-15 | INV. H04L12/64 |
| Y | * column 2, line 24 - line 35; figure 4a * | 4,10 | |
| Y | WO 03/007517 A1 (OVERTURE NETWORKS INC [US]) 23 January 2003 (2003-01-23) * figure 2 * | 4,10 | |
| D,X | EP 1 146 678 A1 (CIT ALCATEL [FR]) 17 October 2001 (2001-10-17) * paragraph [0011] * | 1 | |

TECHNICAL FIELDS
SEARCHED    (IPC)

H04L

The present search report has been drawn up for all claims

| Place of search | Date of completion of the search | Examiner |
|---|---|---|
| The Hague | 11 May 2007 | Gregori, Stefano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 42 5034

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2007

| Patent document cited in search report | | Publication date | Patent family member(s) | | Publication date |
|---|---|---|---|---|---|
| US 6862298 | B1 | 01-03-2005 | NONE | | |
| WO 03007517 | A1 | 23-01-2003 | CA | 2452514 A1 | 23-01-2003 |
| | | | EP | 1413076 A1 | 28-04-2004 |
| EP 1146678 | A1 | 17-10-2001 | AT | 349113 T | 15-01-2007 |
| | | | DE | 60032458 T2 | 12-04-2007 |
| | | | JP | 2002009842 A | 11-01-2002 |
| | | | US | 2002007429 A1 | 17-01-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1146678 A1